# FASCICULE DE BREVET EUROPEEN

(11) **EP 1 436 530 B1**
(45) Date de publication et mention de la délivrance du brevet: **06.09.2006**
(21) Numéro de dépôt: 02800650.0
(22) Date de dépôt: 11.10.2002
(51) Int. Cl.: F16H 48/08

(54) **DIFFERENTIEL ET PROCEDE D'ASSEMBLAGE DE CE DIFFERENTIEL**
DIFFERENTIAL UND VERFAHREN ZUR MONTAGE DES DIFERENTIALS
DIFFERENTIAL AND METHOD FOR ASSEMBLING SAID DIFFERENTIAL

(30) Priorité: 12.10.2001 FR 0113205
(43) Date de publication de la demande: 14.07.2004
(73) Titulaire: Ateliers Mecaniques et Industries Speciales, 03100 Montlucon (FR)
(72) Inventeur: BOSTBARGE, Guy, F-03410 DOMERAT (FR)
(74) Mandataire: Myon, Gérard Jean-Pierre
(86) Numéro de dépôt international: PCT/FR2002/003486
(87) Numéro de publication internationale: WO 2003/031843

(56) Documents cités:
- GB-A- 1 280 670
- US-A- 3 202 466
- US-A- 3 872 741
- US-A- 5 806 371
- PATENT ABSTRACTS OF JAPAN vol. 008, no. 061 (M-284), 23 mars 1984 (1984-03-23) -& JP 58 211053 A (ISUZU JIDOSHA KK), 8 décembre 1983 (1983-12-08)

## Description

La présente invention se rapporte aux différentiels dont le corps, à l'intérieur duquel sont montés les pignons planétaires et les pignons satellites, est en deux parties. Plus précisément, elle concerne ce corps, un différentiel comprenant ce corps, ainsi qu'un procédé d'assemblage de ce différentiel.

Un différentiel connu comporte deux demi-coquilles globalement symétriques. Ces dernières, une fois assemblées par serrage de l'une contre l'autre, forment le corps du différentiel et délimitent conjointement un logement contenant notamment deux pignons planétaires, deux pignons satellites et deux coupelles percées, chacune disposée entre l'un des pignons planétaires et le corps du différentiel. Du fait de la tolérance de fabrication des pièces constitutives de ce différentiel, un réglage du jeu entre ses pignons est prévu lors de son assemblage. Pour ce faire, plusieurs coupelles de différentes épaisseurs sont montées successivement, jusqu'à ce que l'on ai trouvé celles qui permettent d'obtenir le réglage voulu. Outre qu'elle est fastidieuse, cette manière de procéder est longue et doit être effectuée manuellement.

Dans le document de brevet JP-58 211053, il est décrit un corps de différentiel, selon le préambule de la revendication 1, dans un boîtier duquel sont vissés un premier et un deuxième élément tubulaires. Le réglage du jeu à l'intérieur de ce différentiel requiert d'ajuster tant la position du premier élément tubulaire que celle du deuxième élément tubulaire.

L'invention a donc pour but de faciliter le réglage d'un jeu à l'intérieur d'un différentiel et/ou du couple de traînée de ce différentiel.

Au sens où on l'entend ici, le couple de traînée d'un différentiel est le couple qu'il faut exercer sur l'un de ses pignons planétaires pour entraîner ce pignon planétaire lorsque, l'autre pignon planétaire étant libre de tourner, le corps du différentiel est immobilisé. Comme on l'aura compris, le couple de traînée dépend notamment des jeux à l'intérieur du différentiel.

Aux fins d'atteindre le but précité, l'invention a pour objet un corps de différentiel, à l'intérieur duquel sont destinés à être montés deux pignons planétaires et au moins deux pignons satellites, chacun en prise avec les deux pignons planétaires, ce corps comportant des première et deuxième parties destinées à être assemblées, ces première et deuxième parties comportant des moyens de guidage complémentaires et aptes à les guider en rapprochement-éloignement relatif selon l'axe de rotation du différentiel, caractérisé en ce que la première partie comporte au moins deux guides intérieurs pour le montage à coulissement d'au moins un axe de montage à rotation de l'un au moins des pignons satellites, chacun de ces deux guides reliant deux points décalés l'un de l'autre selon une direction parallèle à l'axe de rotation du différentiel.

L'invention a également pour objet un différentiel comprenant au moins :
- deux pignons planétaires,
- deux pignons satellites, chacun en prise avec les deux pignons planétaires, et
- un corps à l'intérieur duquel sont montés les pignons planétaires et les pignons satellites, ce corps comprenant des première et deuxième parties assemblées,
caractérisé en ce que le corps est tel que défini ci-dessus, au moins un axe de montage à rotation des pignons satellites étant monté coulissant, la position relative desdites première et deuxième parties étant réglée de manière à ce que les pignons planétaires aient un jeu axial prédéterminé ou de manière à ce que le différentiel ait un couple de traînée prédéterminé, lesdites première et deuxième parties étant bloquées dans cette position relative réglée.

De plus, l'invention a pour objet un procédé d'assemblage du différentiel tel que défini ci-dessus, caractérisé en ce qu'il comporte au moins les étapes dans lesquelles :
a) on dispose au moins les pignons planétaires et les pignons satellites entre les première et deuxième parties ;
b) on règle la position relative desdites première et deuxième parties, afin de régler le jeu axial de l'un au moins des pignons planétaires ou le couple de traînée du différentiel, et
c) on bloque les première et deuxième parties dans la position déterminée lors de l'étape b.

L'invention sera bien comprise à la lecture de la description qui va suivre, donnée uniquement à titre d'exemple et faite en se référant aux dessins annexés, sur lesquels :
- la figure 1 est une vue en coupe axiale d'un différentiel conforme à l'invention ;
- la figure 2 est une vue éclatée, en perspective, et représente le corps, en deux parties l'une et l'autre conformes à l'invention, du différentiel de la figure 1, l'une de ces deux parties étant pourvue de deux coupelles constitutives du différentiel ;
- la figure 3 est une vue en coupe axiale de l'une de ces deux coupelles constitutives du différentiel représenté à la figure 1 ; et
- la figure 4 représente la coupelle de la figure 3, cette coupelle étant vue par celle de ses deux faces opposées qui est destinée à être tournée vers l'extérieur.

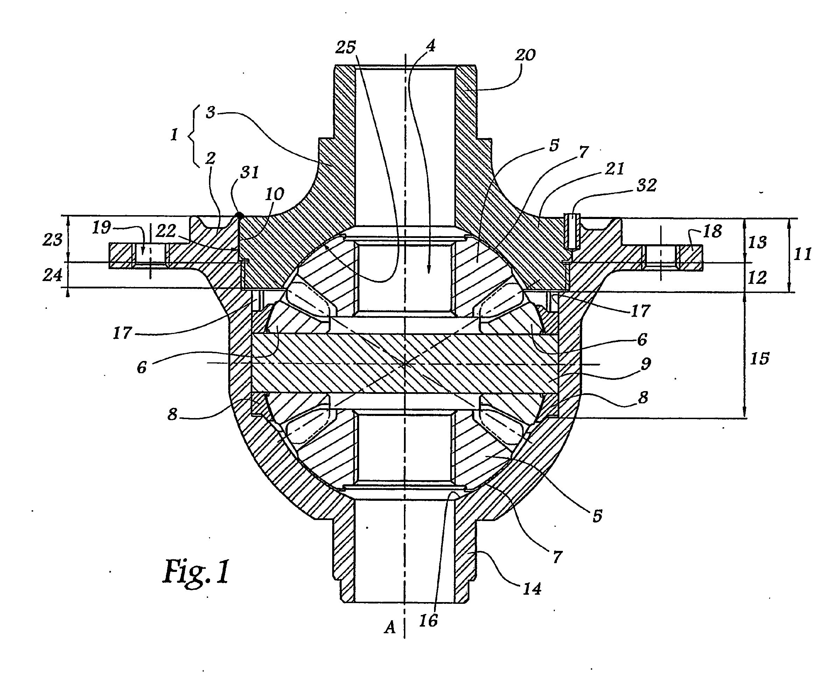

La figure 1 représente un différentiel qui est conforme à l'invention et comporte un corps 1 en deux parties, à savoir un boîtier 2 et un obturateur 3. Dans ce corps 1, qui délimite un logement intérieur 4, sont montés deux pignons planétaires 5, deux pignons satellites 6, deux coupelles anti-friction 7 disposées à l'opposé l'une de l'autre, deux coupelles coulissantes 8 également disposées à l'opposé l'une de l'autre et un axe de montage 9, qui est engagé dans les coupelles coulissantes 8 et porte les pignons satellites 6.

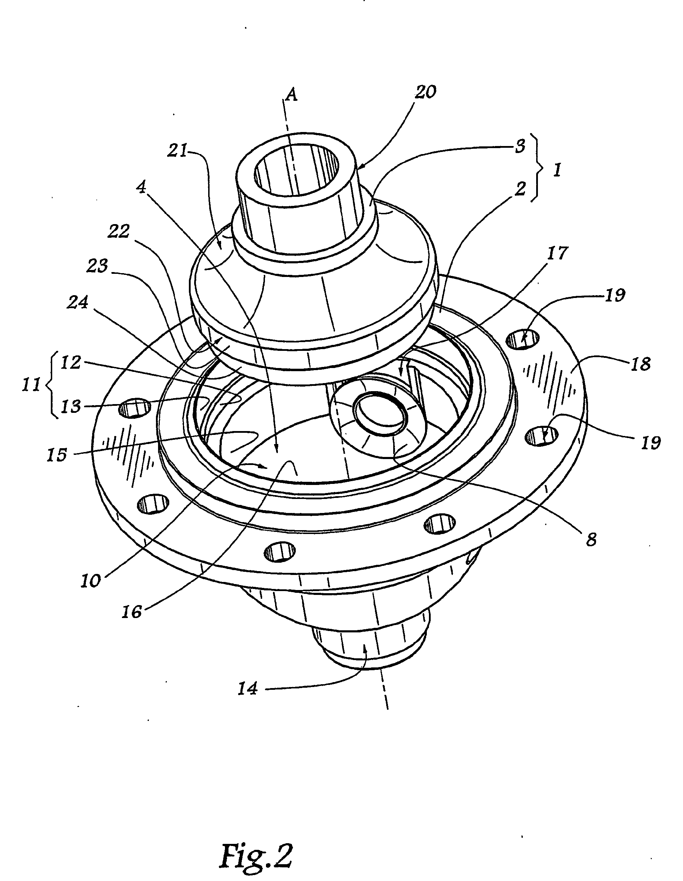

Comme on peut également le voir à la figure 2, le boîtier 2 a globalement la forme d'un solide de révolution qui a l'axe A de rotation du différentiel comme axe de révolution. Il délimite l'essentiel du logement intérieur 4 et comporte une ouverture 10 d'accès à ce logement 4. Cette ouverture 10 est délimitée par une portion d'extrémité 11 de la surface intérieure du boîtier 2. Cette portion d'extrémité 11, qui a une section circulaire, est usinée et forme moyens de guidage. Elle comporte deux tronçons attenants dont l'un est disposé plus profondément que l'autre et référencé 12, et dont l'autre est référencé 13. Le tronçon 12 est taraudé tandis que le tronçon 13 est alésé.

Au-delà du logement intérieur 4, le boîtier 2 se prolonge par une portion tubulaire 14 qui est disposée et dirigée à l'opposé de l'ouverture d'accès 10, et qui est prévue pour le passage d'un arbre de transmission non représenté, destiné à être accouplé à l'un des pignons planétaires 5.

Entre la portion d'extrémité 11 et la portion tubulaire 14, la surface intérieure du boîtier 2 comporte un tronçon 15, globalement cylindrique et attenant à la portion d'extrémité 11, puis elle se termine par une surface de fond 16, quant à elle concave et sensiblement sphérique. Au niveau du tronçon 15, elle délimite deux gorges intérieures 17, disposées en regard et sensiblement axiales. Chacune de ces gorges 17, dont les fonds et les côtés respectifs sont plans, forme un guide dans lequel est monté à coulissement l'une des deux coupelles 8.

A proximité de son ouverture d'accès 10, le boîtier 2 comporte une couronne extérieure et radiale 18, laquelle forme une bride de fixation par serrage d'une couronne dentée, non représentée, prévue pour l'entraînement du différentiel. La couronne radiale 18 est percée de trous 19 pour le passage de vis, également non représentées, de fixation de la couronne dentée.

Le boîtier 2 est une pièce d'un seul tenant, forgée. De préférence, il est réalisé dans un alliage léger, tel qu'un alliage d'aluminium. A l'exception de la portion d'extrémité 11, sa surface intérieure n'est pas usinée, ce qui compense, au moins en partie, le surcoût induit par l'emploi du forgeage, par comparaison avec un procédé de moulage.

L'obturateur 3 a, lui aussi, globalement la forme d'un solide de révolution dont l'axe est l'axe A de rotation du différentiel. Il comporte une partie tubulaire 20 qui est prévue pour le passage d'un autre arbre de transmission, non représenté, destiné à être accouplé à l'un des pignons planétaires 5. Cette partie tubulaire 20 s'évase, puis se prolonge par un couvercle 21, radial, annulaire et épais.

Le bord latéral de ce couvercle 21 est défini par une surface cylindrique 22, laquelle forme moyens de guidage complémentaires de la portion d'extrémité 11. Comme cette dernière, la surface cylindrique 22 est usinée et comporte un tronçon lisse 23 et un tronçon fileté 24.

La paroi intérieure 25 du couvercle 21 délimite pour partie le logement intérieur 4. Aussi, dans sa partie centrale, elle est concave et sensiblement sphérique.

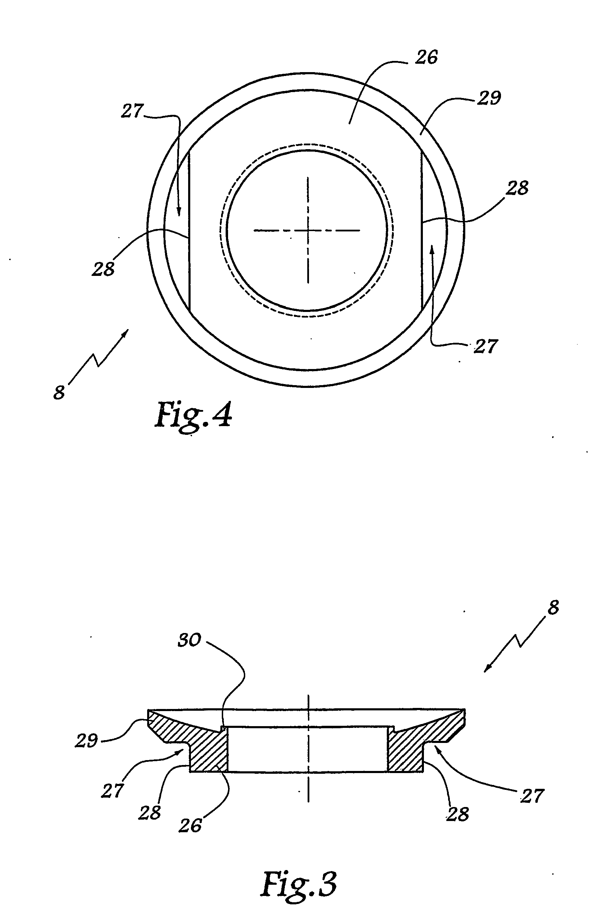

Les deux coupelles coulissantes 8 sont identiques, ce qui se traduit, d'une part, par une simplification de l'assemblage du différentiel et, d'autre part, par une économie. L'une d'entre elles est représentée aux figures 3 et 4 et a globalement une forme annulaire. Elle comporte une embase globalement tubulaire 26, dont la section intérieure est circulaire et dont la section extérieure est également circulaire, sauf au niveau de deux épaulements rectilignes 27, parallèles entre eux et disposés à l'opposé l'un de l'autre. Les faces latérales 28 de ces deux épaulements 27 sont destinées à coopérer avec les côtés des gorges 17, afin d'assurer, d'une part, le guidage de la coupelle 8 correspondante notamment lors de son montage et, d'autre part, la transmission des efforts entre le boîtier 2 et l'axe de montage 9.

La surface intérieure de l'embase 26 délimite un logement pour l'une des extrémités de l'axe de montage 9. Dans l'exemple représenté, ce logement a une section transversale circulaire, si bien qu'il se comporte comme un palier.

A partir de l'embase 26 s'évase un siège 29 pour l'un des pignons satellites 6. La surface intérieure de ce siège 29 est une surface de révolution qui est concave et sensiblement sphérique, et elle est séparée de la surface intérieure de l'embase 26 par un rebord annulaire 30, dirigé selon l'axe de la coupelle 8 et prévu pour le centrage de l'un des pignons satellites 6.

Chaque coupelle 8 est une pièce d'un seul tenant, forgée à froid et réalisée en un métal.

Chacun des pignons 5 et 6 est connu en soi et possède une denture conique et une face extérieure convexe et sensiblement sphérique.

Chaque coupelle 7 présente la forme d'une tôle de faible épaisseur, percée d'un trou central pour le passage d'un axe de transmission et bombée à la manière d'une calotte sensiblement sphérique.

L'axe de montage 9 est formé par un barreau cylindrique, de section circulaire.

Pour assembler le différentiel représenté à la figure 1, on commence par introduire une coupelle 7, puis un pignon planétaire 5, à l'intérieur du boîtier 2.

Ensuite, après avoir enfilé les deux pignons satellites 6 et les deux coupelles 8 sur l'axe de montage 9, on engage l'ensemble ainsi formé dans le logement 4, en prenant soin de placer les embases 26 des coupelles 8 dans les gorges 17. On repousse alors cet ensemble vers le fond du boîtier 2, en faisant coulisser simultanément l'une et l'autre coupelles 8 dans les guides formés par les gorges 17. On notera à quel point les pignons satellites 6, l'axe de montage 9 et les deux coupelles 8 sont facilement et rapidement montés dans la mesure où on les met en place tous en même temps. L'étape en cours de description est achevée une fois que l'autre pignon planétaire 5 et l'autre coupelle 7 ont eux aussi été disposés à l'intérieur du boîtier 2, et que l'obturateur 3 a été pré-positionné au niveau de l'ouverture d'accès 10.

Ensuite commence l'étape de réglage du couple de traînée du différentiel ou du jeu, selon l'axe A, du mécanisme à l'intérieur du corps 1. Ce réglage s'effectue en vissant plus ou moins profondément le couvercle 21 dans le boîtier 2, ce qui peut être réalisé par un automate agissant à partir d'une mesure continue ou de mesures successives du couple de traînée. En variante, on peut procéder de la manière suivante : on commence par visser complètement, c'est-à-dire jusqu'à venir en butée, l'obturateur 3 dans le boîtier 2, puis on dévisse cet obturateur 3 d'une quantité correspondante au jeu voulu. On notera que les tronçons filetés 12 et 24 en coopération forment des moyens pour régler avec précision la position relative, en rapprochement-éloignement selon l'axe A, du boîtier 2 et de l'obturateur 3. Comme l'axe de montage 9 est monté coulissant selon l'axe A, à l'aide des coupelles 8, il se positionne de lui-même à l'intérieur du boîtier 2, de sorte que les jeux axiaux des deux pignons planétaires 5 sont réglés simultanément en une seule opération.

Une fois réglée la position relative du boîtier 2 et de l'obturateur 3, ces derniers sont immobilisés l'un par rapport à l'autre, à l'aide de moyens de blocage qui, dans l'exemple représenté, sont formés par un cordon de soudure 31 disposé le long du bord du couvercle 21, ainsi que par une goupille 32 insérée à force dans un trou percé à la fois dans le boîtier 2 et l'obturateur 3, là où coopèrent la portion d'extrémité 11 et la surface cylindrique 22.

Le réglage et l'assemblage qui viennent d'être décrits sont particulièrement simples et rapides à effectuer, conformément au but que l'invention entend atteindre.

De plus, contrairement à l'art antérieur mentionné dans l'introduction, il n'est pas nécessaire de fabriquer, gérer et stocker tout un jeu de coupelles de différentes épaisseurs.

En outre, le réglage du jeu ou du couple de traînée peut être automatisé.

La figure 1 représente le différentiel tel qu'il est agencé à l'issu de l'ensemble des étapes d'assemblage décrites précédemment. Le boîtier 2 et l'obturateur 3 sont alors rigidement associés coaxialement. Ils retiennent entre eux, à jeu réduit dans la direction définie par l'axe A; l'ensemble du mécanisme et notamment les pignons planétaires 5. L'axe 9, sur lequel sont montés fous les pignons satellites 6, est donc commun à ceux-ci, ce qui simplifie l'assemblage du différentiel et confère à l'ensemble une rigidité accrue. La forme des sièges 29 des coupelles 8 est telle qu'elle favorise la rotation des pignons satellites 6, tout comme les coupelles anti-friction 7 favorisent la rotation des pignons planétaires 5. Ces coupelles anti-friction 7 sont d'autant plus utiles que les surfaces du corps 1 sur lesquelles elles s'appliquent ne sont pas usinées.

L'invention ne se limite pas au mode de réalisation décrit précédemment.

En particulier, l'un des deux moyens de blocage que sont le cordon de soudure 31 et la goupille 32 peut être supprimé, tout en conservant l'autre. De plus, ces moyens de blocage peuvent être remplacés ou complétés par d'autres, comme par exemple une couronne filetée, serrée contre le couvercle 21 par vissage dans le boîtier 2, à la manière d'un contre-écrou. Le blocage recherché peut également être obtenu par sertissage du boîtier 2 sur l'obturateur 3 ou par collage.

De plus, bien que le différentiel décrit précédemment à titre d'exemple ne comporte que deux pignons satellites 6, un différentiel en possédant plus, par exemple trois ou quatre, ne sort pas du cadre de l'invention.

Par rapport aux différentiels connus dans lesquels aucun réglage du couple de traînée n'est effectué, un différentiel selon l'invention présente des performances de fonctionnement améliorées.

## Revendications

1. Corps de différentiel, à l'intérieur duquel sont destinés à être montés deux pignons planétaires (5) et au moins deux pignons satellites (6), chacun en prise avec les deux pignons planétaires (5), ce corps comportant des première (2) et deuxième (3) parties destinées à être assemblées, ces première (2) et deuxième (3) parties comportant des moyens (11, 22) de guidage complémentaires et aptes à les guider en rapprochement-éloignement relatif selon l'axe de rotation (A) du différentiel, **caractérisé en ce que** ladite première partie comporte au moins deux guides intérieurs (17) pour le montage à coulissement d'au moins un axe (9) de montage à rotation de l'un au moins des pignons satellites (6), chacun de ces deux guides (17) reliant deux points décalés l'un de l'autre selon une direction parallèle à l'axe de rotation (A) du différentiel.

2. Corps selon la revendication 1, **caractérisé en ce que** la première et la deuxième partie comportent des moyens (12 ; 24) de réglage de leur position relative en rapprochement-éloignement.

3. Corps selon la revendication 2, **caractérisé en ce que** lesdits moyens de réglage comportent un filetage et un taraudage complémentaires, prévus sur au moins une partie (12 ; 24) des moyens de guidage (11 ; 22).

4. Corps selon l'une quelconque des revendications précédentes, **caractérisé en ce que** ladite première partie présente la forme d'un boîtier (2) délimitant au moins l'essentiel d'un logement (4) au moins pour les pignons planétaires (5) et satellites (6), ce boîtier comprenant une ouverture (10) d'accès audit logement (4), cette ouverture (10) étant destinée à être obturée par ladite deuxième partie (3).

5. Corps selon la revendication 4, **caractérisé en ce que** ladite première partie est une pièce forgée, au moins l'essentiel de sa surface intérieure (15, 16, 17) qui délimite ledit logement (4) ne comportant pas de trace d'usinage.

6. Différentiel comprenant au moins :
- deux pignons planétaires (5),
- deux pignons satellites (6), chacun en prise avec les deux pignons planétaires (5), et
- un corps (1) à l'intérieur duquel sont montés les pignons planétaires (5) et les pignons satellites (6), ce corps (1) comprenant des première et deuxième parties (2, 3) assemblées,
**caractérisé en ce que** le corps est selon l'une quelconque des revendications précédentes, au moins un axe (9) de montage à rotation des pignons satellites (6) étant monté coulissant, la position relative desdites première et deuxième parties (2, 3) étant réglée de manière à ce que les pignons planétaires aient un jeu axial prédéterminé ou de manière à ce que le différentiel ait un couple de traînée prédéterminé, lesdites première et deuxième parties (2, 3) étant bloquées dans cette position relative réglée.

7. Différentiel selon la revendication 6, **caractérisé en ce que** ce différentiel comporte deux pièces (8) dont chacune délimite un logement recevant une extrémité dudit ou de l'un de plusieurs axes (9) de montage à rotation des pignons satellites (6), chacun desdits guides présentant la forme d'une gorge (17) dans laquelle coulisse l'une des deux pièces (8) .

8. Différentiel selon la revendication 6 ou 7, **caractérisé en ce qu'**il comporte une goupille (32) de blocage des première et deuxième parties (2, 3) dans ladite position relative réglée.

9. Différentiel selon l'une quelconque des revendications 6 à 8, **caractérisé en ce que** chacune des première et deuxième parties (2, 3) comporte une surface intérieure (16, 25), lesdites surfaces intérieures étant disposées en regard et globalement concaves, le différentiel comportant deux coupelles antifriction (7), chacune placée entre l'une de ces deux surfaces globalement-concaves (16, 25) et une surface globalement convexe de l'un des pignons planétaires (5).

10. Procédé d'assemblage du différentiel selon l'une quelconque des revendications 6 à 9, **caractérisé en ce qu'**il comporte au moins les étapes dans lesquelles :
a) on dispose au moins les pignons planétaires (5) et les pignons satellites (6) entre les première et deuxième parties (2, 3) ;
b) on règle la position relative desdites première et deuxième parties (2, 3), afin de régler le jeu axial de l'un au moins des pignons planétaires (5) ou le couple de traînée du différentiel, et
c) on bloque les première et deuxième parties (2, 3) dans la position déterminée lors de l'étape b.

11. Procédé d'assemblage selon la revendication 10, **caractérisé en ce qu'**avant l'étape a), on fait coulisser, à l'intérieur de ladite première partie, ledit ou plusieurs axes de montage (9) portant les pignons satellites (6).

## Claims

1. Differential body, inside which are intended to be mounted two axle pinions (5) and at least two pinion gears (6), each meshing with the two axle pinions (5), this body comprising first (2) and second (3) parts intended to be assembled, these first (2) and second (3) parts comprising complementary guiding means (11, 22) and adapted to guide them in relative approach and separation along the axis of rotation (A) of the differential, **characterised in that** said first part comprises at least two inner guides (17) for slidably mounting at least one pin (9) for rotatable assembly of at least one of the pinion gears (6), each of these two guides (17) joining two points offset from one another in a direction pafallel to the axis of rotation (A) of the differential.

2. Body according to claim 1, **characterised in that** the first and the second part comprise means (12; 24) for adjusting their relative position in approach and separation.

3. Body according to claim 2, **characterised in that** said adjusting means comprise a threaded portion and a tapped portion which arc complementary, provided on at least one part (12; 24) of the guiding means (11; 22).

4. Body according to any one of the preceding claims, **characterised in that** said first part has the shape of a casing (2) defining at least the essential part of a housing (4) at least for the axle pinions (5) and pinion gears (6), this casing comprising an opening (10) for access to said housing (4), this opening (10) being intended to be obturated by said second part (3).

5. Body according to claim 4, **characterised in that** said first part is a forged piece, at least the essential part of its inner surface (15, 16, 17) which defines said housing (4) not comprising any trace of machining.

6. Differential comprising at least:
- two axle pinions (5),
- two pinion gears (6) each meshing with the two axle pinions (5), and
- a body (1) inside which are mounted the axle pinions (5) and the pinion gears (6), this body (1) comprising assembled first and second parts (2, 3),
**characterised in that** the body is according to any one of the preceding claims, at least one pin (9) for rotatable assembly of the pinion gears (6) being slidably mounted, the relative position of said first and second parts (2, 3) being adjusted so that the axle pinions have a predetermined axial play or so that the differential has a predetermined drag torque, said first and second parts (2, 3) being locked in this adjusted relative position.

7. Differential according to claim 6, **characterised in that** this differential comprises two parts (8) of which each defines a housing receiving an end of said pin (9) or of one of a plurality thereof for rotatable assembly of the pinion gears (6), each of said guides having the shape cf a groove (17) in which one of the two parts (8) slides.

8. Differential according to claim 6 or 7, **characterised in that** it comprises a pin (32) for locking the first and second parts (2, 3) in said adjusted relative position.

9. Differential according to any one of claims 6 to 8, **characterised in that** each of the first and second parts (2, 3) comprises an inner surface (16, 25), said inner surfaces being arranged opposite one another and being substantially concave, the differential comprising two anti-friction dish elements (7) each placed between one of these two substantially concave surfaces (16, 25) and a substantially convex surface of one of the axle pinions (5) .

10. Method for assembling the differential according to any one of claims 6 to 9, **characterised in that** it comprises at least the steps in which:
a) at least the axle pinions (5) and the pinion gears (6) are arranged between the first and second parts (2, 3) ;
b) the relative position of said first and second parts (2, 3) is adjusted, so as to adjust the axial play of at least one of the axle pinions (5) or the drag torque of the differential, and
c) the first and second parts (2, 3) are locked in the position determined during step b.

11. Method for assembling according to claim 10, **characterised in that**, before step a), said assembly pin (9) or a plurality thereof bearing the pinion gears (6) is/are made to slide inside said first part.

## Patentansprüche

1. Differentialgetriebekörper, in dessen Innerem vorgesehen ist, mindestens zwei Planetenräder (5) und mindestens zwei Satellitenräder (6) jeweils in Eingriff mit den beiden Planetenrädern (5) anzubringen,
wobei dieser Körper einen ersten Abschnitt (2) und einen zweiten Abschnitt (3) umfasst, die zum Zusammenbau bestimmt sind,
wobei der erste Abschnitt (2) und der zweite Abschnitt (3) Führungseinrichtungen (11, 22) umfassen, die komplementär und dazu ausgelegt sind, sie in Bezug auf die Drehachse (A) des Differentialgetriebes zueinander/auseinander zu führen,
**dadurch gekennzeichnet, dass**
der erste Abschnitt mindestens zwei Innenführungen (17) zur gleitbeweglichen Anbringung mindestens einer drehbeweglichen Einbauachse (9) mindestens eines der Satellitenräder (6) umfasst,
wobei jede der beiden Führungen (17) zwei voneinander entlang einer zur Drehachse (A) des Differentialgetriebes parallelen Richtung versetzte Punkte miteinander verbindet.

2. Körper nach Anspruch 1,
**dadurch gekennzeichnet, dass**
der erste und der zweite Abschnitt Einstelleinrichtungen (12, 24) für ihre relative Stellung bei der Zueinander-/Auseinanderführung umfassen.

3. Körper nach Anspruch 2,
**dadurch gekennzeichnet, dass**
die Einstelleinrichtungen ein Innengewinde und ein Außengewinde umfassen, die komplementär sind und über mindestens einem Teil (12, 24) der Führungseinrichtungen (11, 22) vorgesehen sind.

4. Körper nach einem der vorhergehenden Ansprüche,
**dadurch gekennzeichnet, dass**
der erste Abschnitt die Form eines Gehäuses (2) aufweist, das zumindest den Großteil einer Aufnahme (4) für zumindest die Planetenräder (5) und Satellitenräder (6) begrenzt,
wobei dieses Gehäuse eine Zugangsöffnung (10) zur Aufnahme (4) umfasst,
wobei diese Öffnung (10) dazu bestimmt ist, durch den zweiten Abschnitt (3) verschlossen zu sein.

5. Körper nach Anspruch 4,
**dadurch gekennzeichnet, dass**
der zweite Abschnitt ein geschmiedetes Teil ist,
wobei der Großteil seinen Innenfläche (15, 16, 17), welche die Aufnahme (4) begrenzt, keine Bearbeitungsspur aufweist.

6. Differentialgetriebe, das mindestens umfasst:
- zwei Planetenräder (5),
- zwei Satellitenräder (6), die jeweils in Eingriff mit den beiden Planetenrädern (5) stehen, und
- einen Körper (1), in dessen Innerem die Planetenräder (5) und die Satellitenräder (6) angebracht sind,
wobei dieser Körper (1) einen ersten und einen zweiten Abschnitt (2, 3) umfasst, die zusammengebaut sind,
**dadurch gekennzeichnet, dass**
der Körper nach einem der vorhergehenden Ansprüche vorliegt,
mindestens eine drehbewegliche Einbauachse (9) der Satellitenräder (6) gleitbeweglich angebracht ist,
wobei die relative Stellung des ersten und des zweiten Abschnitts (2, 3) so geregelt wird, dass die Planetenräder ein vorbestimmtes axiales Spiel haben, oder so, dass das Differentialgetriebe ein vorbestimmtes Widerstandsmoment hat,
wobei der erste und der zweite Abschnitt (2, 3) in dieser relativen eingestellten Stellung festgesetzt werden.

7. Differentialgetriebe nach Anspruch 6,
**dadurch gekennzeichnet, dass**
dieses Differentialgetriebe zwei Teile (8) umfasst, wovon jedes eine Aufnahme begrenzt, die ein Ende der oder einer von mehreren drehbeweglichen Einbauachse/n (9) der Satellitenräder (6) aufnimmt,
wobei jeder der Führungen die Form einer Kehle (17) aufweist, in der eines der beiden Teile (8) gleitet.

8. Differentialgetriebe nach Anspruch 6 oder 7,
**dadurch gekennzeichnet, dass**
es einen Stift (32) zum Festsetzen des ersten und zweiten Abschnitts (2, 3) in der eingestellten relativen Stellung umfasst.

9. Differentialgetriebe nach einem der Ansprüche 6 bis 8,
**dadurch gekennzeichnet, dass**
der erste und der zweite Abschnitt (2, 3) jeweils eine Innenfläche (16, 25) umfasst,
wobei die Innenflächen gegenüberliegend angeordnet und insgesamt konkav sind,
wobei das Differentialgetriebe zwei reibungsarme Lagerschalen (7) umfasst, wovon jede zwischen einer dieser beiden insgesamt konkaven Flächen (16, 25) und einer insgesamt konvexen Fläche eines der Planetenräder (5) eingesetzt ist.

10. Verfahren zum Zusammenbau des Differentialgetriebes nach einem der Ansprüche 6 bis 9,
**dadurch gekennzeichnet, dass** es mindestens die Schritte umfasst, in denen:
(a) zumindest die Planetenräder (5) und die Satellitenräder (6) zwischen dem ersten und zweiten Abschnitt (2, 3) angeordnet werden;
(b) die relative Stellung des ersten und zweiten Abschnitts (2, 3) eingestellt wird, um das axiale Spiel zumindest eines der Planetenräder (5) oder das Widerstandsmoment des Differentialgetriebes einzustellen, und
(c) der erste und zweite Abschnitt (2, 3) in der beim Schritt b) bestimmten Stellung festgesetzt werden.

11. Verfahren zum Zusammenbau des Differentialgetriebes nach Anspruch 10,
**dadurch gekennzeichnet, dass**
man vor dem Schritt a) die oder mehrere Einbauachse/n (9), welche die Satellitenräder (6) trägt/tragen, im Inneren des ersten Abschnitts gleiten lässt.
